(19) Europäisches Patentamt
European Patent Office
Office européen des brevets

(11) **EP 3 876 104 B1**

(12) **EUROPEAN PATENT SPECIFICATION**

(45) Date of publication and mention
of the grant of the patent:
**02.08.2023 Bulletin 2023/31**

(21) Application number: **20160816.3**

(22) Date of filing: **03.03.2020**

(51) International Patent Classification (IPC):
***G06F 12/127*** *(2016.01)*

(52) Cooperative Patent Classification (CPC):
**G06F 12/127;** G06F 2212/1021

(54) **METHOD FOR EVICTING DATA FROM MEMORY**

VERFAHREN ZUR ENTFERNUNG VON DATEN AUS DEM SPEICHER

PROCÉDÉ D'ÉVICTION DE DONNÉES DE LA MÉMOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.09.2021 Bulletin 2021/36**

(73) Proprietor: **Technische Universität München
80333 München (DE)**

(72) Inventors:
• **Fasfous, Nael
80803 München (DE)**
• **Srivatsa, Akshay
81825 München (DE)**
• **Doan, Nguyen Anh Vu
81543 München (DE)**
• **Wild, Thomas
81373 München (DE)**
• **Herkersdorf, Andreas
82266 Inning (DE)**

(74) Representative: **Koplin, Moritz
Anne-Conway-Straße 1
28359 Bremen (DE)**

(56) References cited:
EP-A2- 1 503 303     JP-A- H02 224 040
US-A1- 2008 313 407     US-B2- 6 961 821

# Description

Field

The present disclosure relates to computer resource management. In particular, the present disclosure relates to memory management and involves a decision-making process which can be used in a procedure for evicting data from memory, wherein The decision-making process allows selecting an eviction candidate based on a plurality of eviction criteria.

Background

If a physical memory cannot hold all data that may be accessed by a device to which the memory is assigned, it may be feasible to strive at populating the memory with the most valuable data. If the memory is used as a cache, the most valuable data may be the data that introduces the highest overall latency or, more generally, requires the most resources, if the data is to be retrieved from other sources. An eviction candidate may thus be selected based on one or more eviction criteria which make (presumably) room for more valuable data. Moreover, a similar kind of decision-making may also be needed in other scenarios in which a resource of a plurality of resources is to be assigned to a particular use.

An exemplary system and method for managing and evicting objects stored in a cache is shown in EP 1 503 303 A2 which provides a mechanism for determining which objects to evict based on a weight that is calculated for each object stored in the cache. The weight is determined by at least two factors, including file size, file type, primary user, last access time, and the like, and by the relative importance of each of the factors. The weight for each object may be determined autonomously and/or may be determined upon a trigger event. The factors and their relative importance may be obtained from a policy applicable to one or several computers.

Summary

The invention is set out in the appended set of claims. The dependent claims set out particular embodiments.

The present disclosure provides a resource manager and a method of managing a resource.

The resource manager is configured to determine a plurality of rankings, wherein each of the plurality of rankings assigns a position within the ranking to each of a plurality of resources based on at least one criterion, to select one of said resources by applying a voting algorithm to the plurality of rankings and to cause the resource to be reassigned.

In this regard, the feature that "each of the plurality of rankings assigns a position within the ranking to each of a plurality of resources", as used throughout the description, has the effect that each of the plurality of resources has several positions assigned to it, wherein each of said positions signifies how favorable it would be to reassign the resource in view of the at least one criterion on which the corresponding ranking is based.

The resource manager is a memory manager.

The memory manager is configured to determine a plurality of eviction rankings, wherein each of the plurality of eviction rankings assigns a position within the eviction ranking to each of a plurality of eviction candidates based on at least one eviction criterion, to select one of said eviction candidates by applying a voting algorithm to the plurality of eviction rankings and to cause the selected eviction candidate to be evicted.

In this regard, the term "memory manager", as used throughout the description and the claims, particularly refers to an integrated circuit. The memory manager and the memory may be parts of the same integrated circuit or of different integrated circuits which are interconnected (e.g., by a bus). Moreover, the memory manager may serve a single memory or multiple memories. For example, each memory may indicate its eviction candidates to the memory manager, and the memory manager may return (for each memory) a selected one of said eviction candidates. Furthermore, (if the memory manager serves different memories) the eviction criteria to be used to determine the eviction rankings may be different for different memories. In addition, the eviction criteria may be adapted at run time. For example, the eviction criteria may be adapted based on an observe-learn-adapt scheme or statically, if the memory manager favors a particular data configuration (as witnessed by a set of eviction candidates that is spared from eviction over a substantial number of selection cycles).

Moreover, the term "eviction candidate", as used throughout the description and the claims, particularly refers to a memory block. A memory block may span (consecutive) bit positions within the memory and be referenceable by an index (or pointer). In this regard, the formulation "cause the selected eviction candidate to be evicted", as used throughout the description and the claims, particularly refers to replacing the data stored at said bit positions. The replacement data may be data which was recently requested but not contained in the memory, or the replacement data may be data which was previously neither available from the memory nor from other memories.

Furthermore, the term "eviction ranking", as used throughout the description and the claims, particularly refers to an assignment of positions to the eviction candidates, the positions establishing an order between the eviction candidates which reflects how well the eviction candidates meet the one or more eviction criteria on which the eviction ranking is based. In this regard, it is noted that throughout the specification and the claims, a top position in the eviction ranking signifies that the eviction candidate to which the top position is assigned is favored for eviction in accordance with the one or more eviction criteria on which the eviction ranking is based.

Further, the term "voting algorithm", as used throughout the description and the claims, refers to an algorithm which determines the most favored eviction candidates across multiple eviction rankings by aggregating measures of favorability derived from the multiple eviction rankings. For example, if all available eviction rankings have the top position assigned to the same eviction candidate, said eviction candidate will be selected if applying the voting algorithm to the eviction rankings. Analogously, if all available eviction rankings have the bottom position assigned to the same eviction candidate, said eviction candidate will not be selected for eviction.

The memory manager may be further configured to determine the plurality of eviction rankings in parallel.

In this regard, the formulation "to determine ... in parallel", as used throughout the description and the claims, particularly refers to a temporal overlap in the processing of signals/data through which different eviction rankings are established. For example, a determination of a first eviction ranking and a second eviction may be started (and performed) at the same time.

The memory manager may be further configured to reapply the voting algorithm to a subset of the plurality of eviction rankings if a tie occurs between candidates that are most favored for eviction by the voting algorithm, or the memory manager may be further configured to apply another voting algorithm to the plurality of eviction rankings if a tie occurs between candidates that are most favored for eviction by the previously applied voting algorithm.

For example, the voting algorithm may establish an eviction ranking and a highest position of the eviction ranking may be assigned to two (or more) eviction candidates which thus end up in a tie. If a tie occurs, the memory manager may reapply the voting algorithm to a subset of the plurality of eviction rankings (consisting of fewer eviction rankings than previously considered), wherein the subset may also comprise only one eviction ranking, apply another voting algorithm to the plurality of eviction rankings, or select one of the eviction candidates (at random). The memory manager may also switch between different tie resolution strategies. For example, the memory manager may apply the voting algorithm to a subset of the plurality of eviction rankings and then apply another voting algorithm, if the tie persists. Likewise, the memory manager may apply another voting algorithm to the plurality of eviction rankings and then apply the other voting algorithm to a subset of the plurality of eviction rankings, if the tie persists.

The memory manager may be further configured to randomly select one of the eviction candidates between which a tie has occurred, if reapplying the voting algorithm or applying the other voting algorithm does not favor one of the candidates previously most favored for eviction by the voting algorithm.

The method comprises determining a first ranking which ranks a plurality of resources based on at least one first criterion, determining a second ranking which ranks the plurality of resources based on at least one second criterion, determining a first resource for reassignment based on the first eviction ranking and the second eviction ranking, and reassigning the first resource.

The method is applied to managing a memory.

The method comprises determining a first eviction ranking which ranks a plurality of memory blocks based on at least one first eviction criterion, determining a second eviction ranking which ranks the plurality of memory blocks based on at least one second eviction criterion, determining a first memory block for eviction based on the first eviction ranking and the second eviction ranking, and replacing first data stored in the first memory block with second data.

Determining the first memory block for eviction based on the first eviction ranking and the second eviction ranking involves applying a voting algorithm to the first eviction ranking and the second eviction ranking.

The first and second eviction rankings assign, to each block of the memory, a position in the first eviction ranking and the second eviction ranking, respectively.

A memory block to which a lowest position in the first eviction ranking and/or a lowest position in the second eviction ranking is assigned, may be excluded from being determined as the first memory block.

Hence, memory blocks which are most favored by one of the eviction rankings can be preserved.

Determining the first memory block for eviction based on the first eviction ranking and the second eviction ranking comprises assigning a third value to the first memory block, wherein the third value is an output of a function which takes a first value assigned to a first position of the first memory block in the first eviction ranking and a second value assigned to a second position of the first memory block in the second eviction ranking as inputs.

For example, the third value may be a weighted sum across all values assigned to the positions of the eviction candidate in the eviction rankings.

The third value may be used to establish a voting result and the first memory block may be a memory block to which is assigned a highest position in the voting result.

Determining the first memory block for eviction based on the first eviction ranking and the second eviction ranking may further comprise assigning a sixth value to a second memory block, wherein the sixth value is an output of the function which takes a fourth value assigned to a fourth position of the second memory block in the first eviction ranking and a fifth value assigned to a fifth position of the second memory block in the second eviction ranking as inputs, wherein, if the sixth value equals the third value, one of the first and second eviction rankings is disregarded for determining the first memory block for eviction.

The third value may be a linear combination of the first value and the second value.

Notably, the method is not limited to a particular voting algorithm. Rather, a wide range of voting algorithms may be including, but not limited to, the Borda count, the Condorcet method, plurality voting, the two-round system, the Schulze method, etc.

The voting result may assign a position to each of the plurality of eviction candidates, or only to some of the plurality of eviction candidates.

The method may further comprise monitoring the eviction decisions for favoritism and adapting the function if favoritism is detected.

The method may further comprise determining a third eviction ranking which ranks the plurality of memory blocks based on at least one third eviction criterion, determining a preliminary voting result based on the first eviction ranking, the second eviction ranking and the third eviction ranking, and detecting a tie regarding the first memory block and a second memory block, based on the preliminary voting result.

In response to detecting the tie, a final voting result may be determined based on the first eviction ranking and the second eviction ranking.

The method may further comprise determining a fourth eviction ranking which ranks the plurality of memory blocks based on the at least one first eviction criterion, determining a fifth eviction ranking which ranks the plurality of memory blocks based on the at least one second eviction criterion, selecting a third memory block for eviction based on the fourth eviction ranking and the fifth eviction ranking, and replacing third data stored in the third memory block with fourth data.

That is, the eviction criteria/policies may be kept static for multiple consecutive (or even all) evictions.

The memory may be a cache and the method may further comprise detecting a cache miss in regard to the second data and determining that the cache is full.

It will be appreciated that the features and attendant advantages of the disclosed method may be realized by the disclosed manager and vice versa. Moreover, it is noted that the ordinal numbers "first", "second", "third", etc. as used throughout the description and the claims shall not be interpreted as establishing an order between the entities to which they refer, unless explicitly stated otherwise, as they are generally used to identify a particular entity of a plurality of entities (e.g., "first memory block", "second memory block", "first eviction ranking", "second eviction ranking", "first position", "second position").

Brief Description of Drawings

The foregoing aspects and many of the attendant advantages will become more readily appreciated as the same becomes better understood by reference to the following description of embodiments, when taken in conjunction with the accompanying drawings, wherein like reference numerals refer to like parts throughout the various views, unless otherwise specified. In this regard, it is noted that although the described embodiments relate to memory management, other resources than memories (e.g., processors, processor cores, bandwidth, etc.) are also contemplated.

Fig. 1 illustrates a process of determining eviction rankings and determining a first memory block for eviction based on the eviction rankings;

Fig. 2 illustrates resolving ties in the process of Fig. 1;

Fig. 3 shows a memory and a memory manager;

Fig. 4 shows a flow chart of the process;

Fig. 5 to Fig. 7 show further examples of procedures for resolving a tie; and

Fig. 8a and Fig. 8b illustrate detecting favoritism.

Notably, the drawings are not drawn to scale and unless otherwise indicated, they are merely intended to conceptually illustrate the structures and procedures described herein.

Description of Embodiments

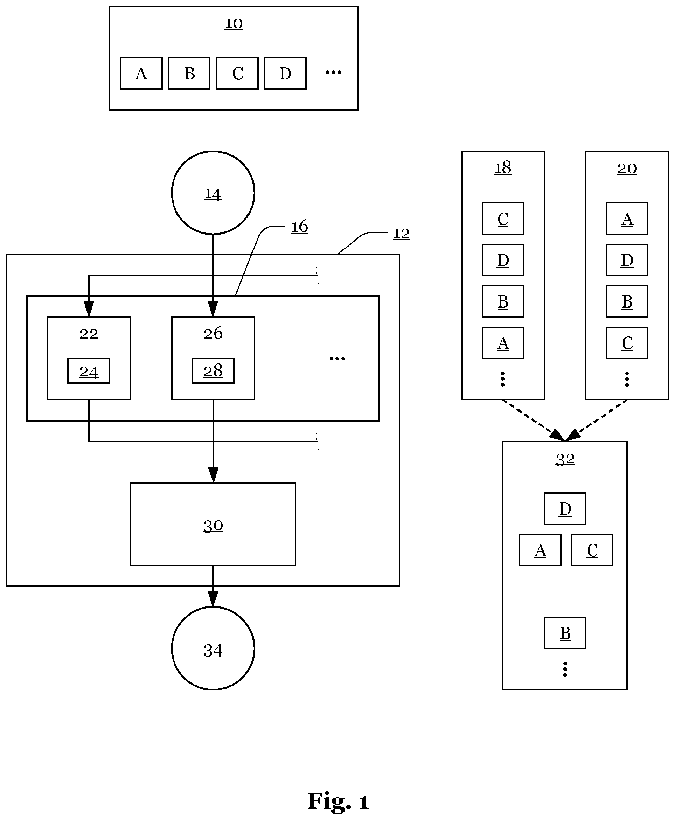

Fig. 1 shows memory 10 which comprises memory blocks A, B, C and D. Memory 10 may contain more or less memory blocks than memory blocks A, B, C and D shown in Fig. 1, but the remainder of this description is written as if memory 10 contained only memory blocks A, B, C and D, i.e., as if memory 10 was divided into memory blocks A, B, C and D. When all blocks A, B, C and D of memory 10 contain valid data, storing data that is not yet contained in (or by the nature of its content affiliated with) one of memory blocks A, B, C and D, is preceded by execution of a memory management process that decides which one of memory blocks A, B, C or D is to be evicted.

Execution of the memory management process by memory manager 12 is triggered by decision request 14. Decision request 14 causes ranking unit 16 of memory manager 12 to generate multiple eviction rankings 18 and 20. Eviction ranking 18 is generated by ranking module 22. Ranking module 22 comprises (or has access to) one or more eviction criteria 24. The one or more eviction criteria 24 and optionally one or more rules relating to the one or more eviction criteria 24 define a specific eviction policy.

Eviction ranking 20 is generated by ranking module 26 which can be operated in parallel with ranking module 22. Ranking module 26 also comprises (or operates in accordance with) one or more eviction criteria 28 and optionally one or more rules relating to the one or more eviction criteria 28. The one or more eviction criteria 28 and optionally one or more rules define a specific eviction policy which differs from the eviction policy followed by ranking module 22. Ranking modules 22 and 26 thus operate on (the same) set of eviction candidates (i.e., memory blocks A, B, C and D of memory 10) but differ in regard to the eviction policies they follow. As indicated in Fig. 1, ranking unit 16 may contain further ranking modules (not shown) each of which is unique in view of the eviction policy that it follows.

Each of eviction rankings 18 and 20 assigns a position to each of memory blocks A, B, C and D. The positions assigned to memory blocks A, B, C and D reflect which one of memory blocks A, B, C and D is to be evicted first, which one of memory blocks A, B, C and D is to be evicted second, etc. In other words, eviction rankings 18 and 20 are reflective of a preference with which each of memory blocks A, B, C and D is to be evicted or maintained under the applied eviction policies. Hence, although eviction rankings 18 and 20 may (depending on the applied eviction policies) both assign the same positions to memory blocks A, B, C and D, eviction rankings 18 and 20 can generally be expected to order the same eviction candidates in different ways.

For example, each of eviction rankings 18 and 20 may be based on one eviction policy selected from the group consisting of Least Recently Used (LRU) and Least Frequently Used (LFU). If memory 10 is employed in a multi-core environment that has multiple memories (caches) that possibly contain (in part) the same data and a sparse directory, each of eviction rankings 18 and 20 may be based on one eviction policy selected from the group consisting of Least Recently Used (LRU), Least Frequently Used (LFU), Least Number of Sharers (LNS) and Shortest Distance First (SDF). However, the present disclosure is not limited to said eviction policies.

In the present example, eviction ranking 18 would, if being the only one of eviction rankings 18 and 20 that is relied on, suggest evicting memory block C. Eviction ranking 20 would, if being the only one of eviction rankings 18 and 20 that is relied on, suggest evicting memory block A. To determine which one of memory blocks A, B, C and D is to be evicted, the memory manager 12 contains a voting unit 30 which processes the eviction rankings 18 and 20. Voting unit 30 translates positions assigned to a memory block to numerical values $V_i$ (with i identifying the eviction policy) and aggregates the numerical values (for example, by summing them up: $\sum_{i=0}^{n} V_i$ with $n$ being the number of eviction policies that are available or taken into account). For instance, voting unit 30 may assign:

- a "1" and a "4" to memory block A, as memory block A is at the lowest position in eviction ranking 18 and at the highest position in eviction ranking 20, and add both numerical values which results in a "5" for memory block A.
- two times a "2" to memory block B, as memory block B is immediately above the lowest position in eviction ranking 18 and immediately above the lowest position in eviction ranking 20, and add both numerical values which results in a "4" for memory block B.
- a "4" and a "1" to memory block C, as memory block C is at the highest position in eviction ranking 18 and at the lowest position in eviction ranking 20, and add both numerical values which results in a "5" for memory block C.
- two times a "3" to memory block D, as memory block D is immediately below the highest position in eviction ranking 18 and immediately below the highest position in eviction ranking 20, and add both numerical values which results in a "6" for memory block D.

By reordering memory blocks A, B, C and D from highest aggregated value to lowest aggregated value, a voting result 32 (which may be a full eviction ranking as shown in Fig. 1, but may also be a partial eviction ranking or only memory block D) may be established and memory block D (to which the highest position in the voting result 32 is assigned) may be returned by memory manager 12 in decision response 34 which causes memory block D to be evicted. Notably, the above described voting algorithm which applies a linear function to numerical values assigned to the positions is but one example and shall not be construed as limiting, because the described concept lends itself not only to various adaptions of the function but also to fundamentally different voting algorithms.

For example, the voting algorithm may be adapted by assigning weights $a_i$ to eviction rankings 18 and 20, and the numerical values assigned to the positions may be multiplied with the weights before being summed up: $\sum_{i=0}^{n} a_i V_i$. Furthermore, instead of or in addition to multiplying the numerical values with weights, one or more of the numerical values $V_i$ may be replaced with $V_i^{j}$ with $j \neq 1$: $\sum_{i=0}^{n} V_i^{j}$ or $\sum_{i=0}^{n} a_i V_i^{j}$. Moreover, instead of considering all positions, only N positions (for example, the N highest positions) may be taken into account (with N being an integer that is smaller than the number of eviction candidates). Furthermore, certain eviction candidates may be flagged as "not-to-evict" because they achieved a relatively low position in one or more of eviction rankings 18 and 20 (such as memory block A and memory block C in the depicted example).

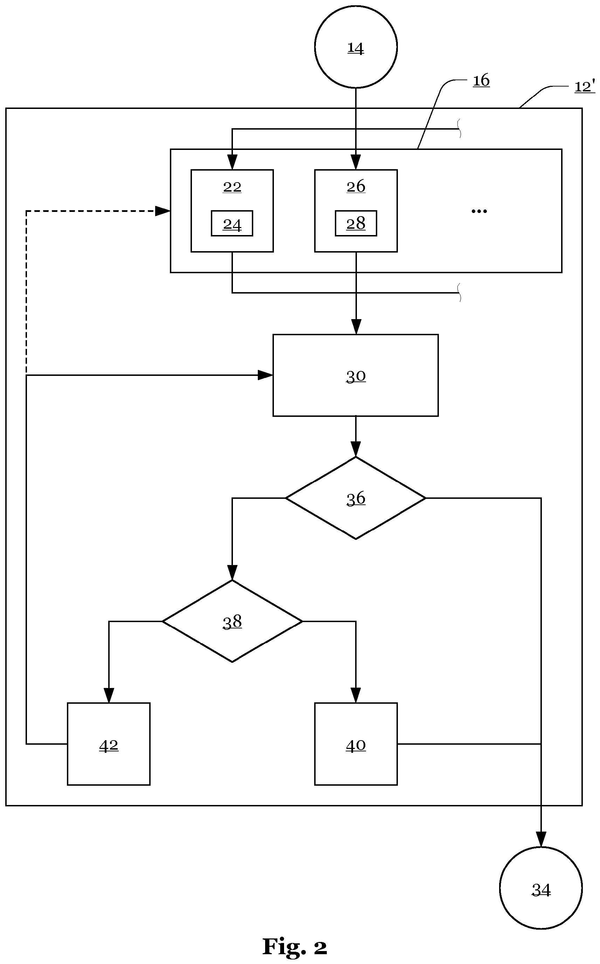

As illustrated in Fig. 1, applying a voting algorithm to eviction rankings 18 and 20 may result in a tie regarding two or more of memory blocks A, B, C and D. If there is no tie regarding the top position, as in the example depicted in Fig. 1, tie resolution may not be required. But if a tie must be resolved, tie resolution may be performed as will be explained with reference to Fig. 2. There, if a need for tie resolution is detected at decision block 36, it is determined at decision block 38 whether a policy agnostic or a policy dependent tie resolution is to be performed.

If it is decided at decision block 38 that a policy agnostic tie resolution is to be performed, action block 40 is invoked which randomly selects one of (or orders) the eviction candidates involved in the tie or settles the tie based on memory transaction states or memory types. Memory transaction states (which may be related to a coherence protocol) may indicate whether a memory block can be readily evicted (which is the case if, for example, the memory block is in a stable state) or whether a waiting time is required before the memory block can be evicted (which is the case, for example, if the memory block is in a transition state). Ties may also be resolved based on memory types (SRAM, DRAM, etc.) as they may have different write-back times. Both memory transaction states and memory types may not be limited to tie-resolution and may (also) be used as an eviction criterion.

If it is decided at decision block 38 that a policy dependent tie resolution is to be performed, action block 42 is invoked which causes voting unit 30 to disregard one of eviction rankings 18 and 20. Another option would be to cause ranking unit 16 to provide additional (or modified) eviction rankings (not shown). For instance, ranking unit 16 may comprise M ranking modules (including ranking modules 22 and 26), each of which applies a different eviction policy to the same set of eviction candidates. If only a subset of the available ranking units is active, additional ranking modules may be activated at request. Likewise, ranking modules may be temporarily inactivated at request. In other words, ranking unit 16 may be provided with a plurality of ranking modules (including ranking modules 22 and 26) which can be activated and deactivated at run time, meaning that a deactivated ranking module does either not provide an eviction ranking or, that the eviction ranking of a deactivated ranking module is disregarded by the voting unit 30. Moreover, ranking modules 22 and 26 may allow for the modification of the underlying eviction polices at run time.

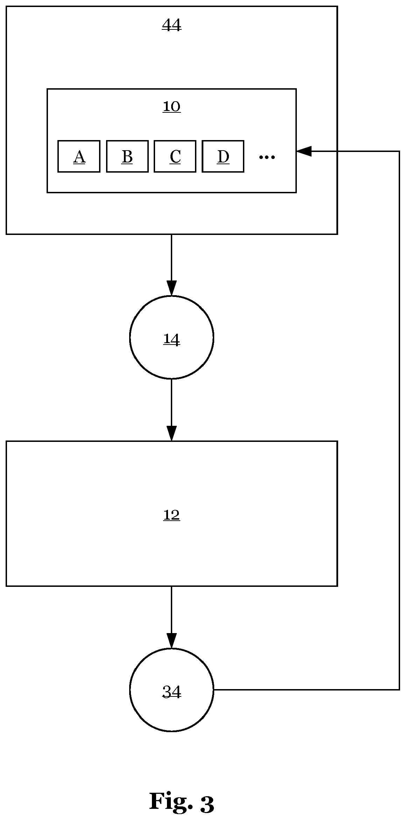

As schematically illustrated in Fig. 3, memory manager 12 may be connected to system 44 which comprises memory 10. System 44 may further comprise one or more processor cores (no shown) and one or more further memories. If an entity within system 44 (such as a processor core) to which memory 10 is assigned requests data that is not stored in memory 10, it may be decided to add said data to memory 10 to avoid future memory misses. If memory 10 is full, decision request 14 may be made. In case that one of memory managers 12 or 12' receives decision requests 14 for different memories, all information required by memory manager 12 or 12' may be provided by system 44 through decision request 14.

For example, decision request 14 may comprise a list of eviction candidates, the eviction policies to be used and the parameters of each eviction candidate that are to be evaluated in accordance with the eviction policies. In case that memory manager 12 or 12' receives decision requests 14 only for memory 10, the information required by memory manager 12 or 12' may already be available in memory manager 12 or 12' or received (in total or part) through decision request 14. If system 44 comprises a plurality of instances of memory 10, each one may be provided with a dedicated memory manager or multiple instances may share a single memory manager.

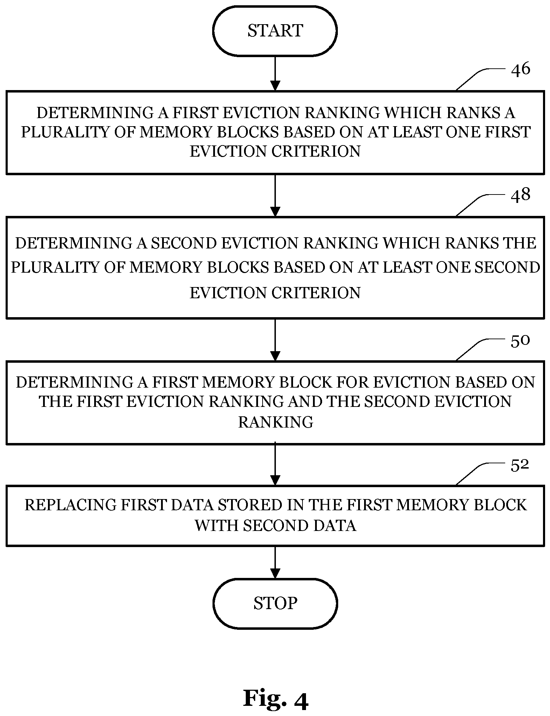

Fig. 4 shows a flow chart of some basic steps performed by memory manager 12. At step 46, memory manager 12 determines eviction ranking 18 which ranks the plurality of memory blocks A, B, C and D based on eviction criterion 24. At step 48, memory manager 12 determines eviction ranking 20 which ranks the plurality of memory blocks A, B, C and D based on eviction criterion 28. Notably, steps 46 and 48 may be performed concurrently. At step 50, memory manager 12 determines memory block D for eviction based on eviction ranking 18 and eviction ranking 20. At step 52, data stored in memory block D is replaced.

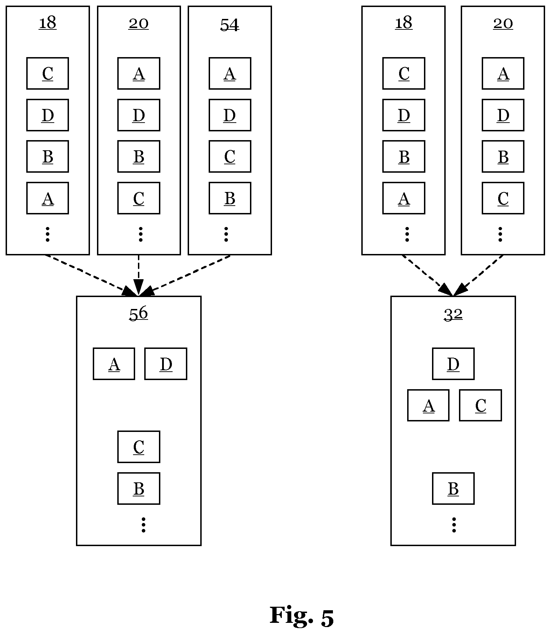

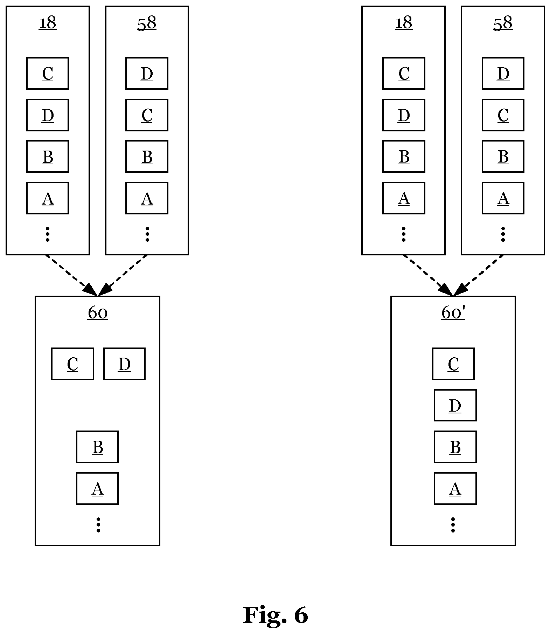

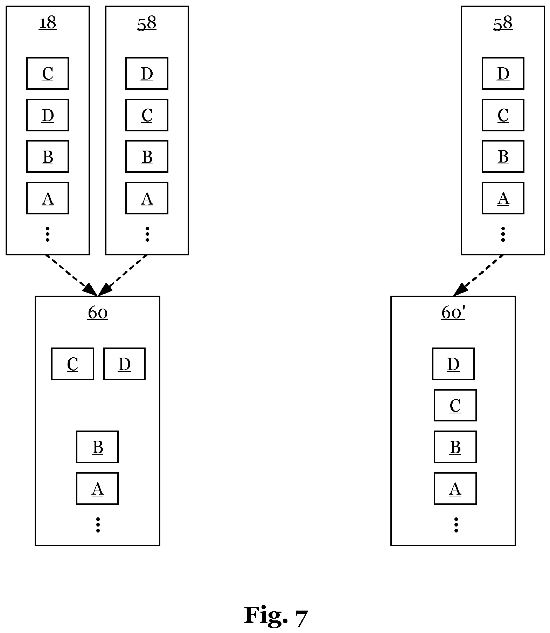

Fig. 5 shows an example where a voting on eviction rankings 18, 20 and 54 results in a tie regarding the top position in voting result 56. As shown in Fig. 5, this tie may be resolved by disregarding eviction ranking 54. Fig. 6 shows another example where a voting on eviction rankings 18 and 58 results in a tie regarding the top position in voting result 60. As shown in Fig. 6, this tie may be resolved by randomly ordering memory blocks C and D involved in the tie. Fig. 7 shows an alternative tie resolution where eviction ranking 18 is disregarded to resolve the tie, leading to result 60'.

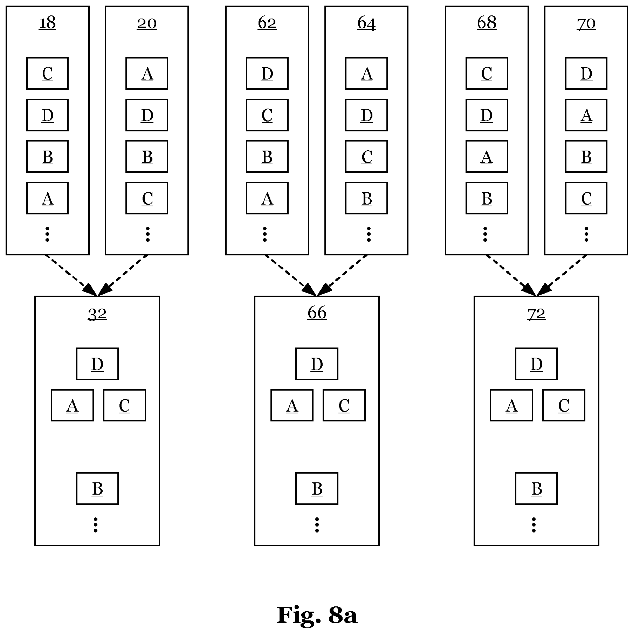

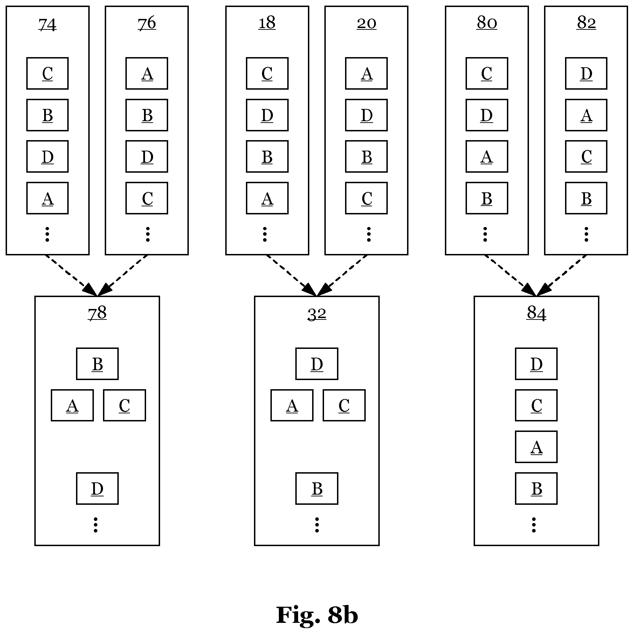

Fig. 8a and Fig. 8b illustrate a series of ranking and voting steps performed on memory blocks A, B, C and D which exhibit favoritism which reveals itself in that a substantially static series of voting results 32, 66, 72, 78, 32 and 84 is determined from eviction rankings 18, 20, 62, 64, 68, 70, 74, 76, 18, 20, 80 and 82. In response, an additional ranking module may be activated, one of ranking modules 22, 26 may be deactivated, or the voting algorithm may be adapted as described above.

Reference Signs List

| | |
|---|---|
| 10 | memory |
| 12 | memory manager |
| 12' | memory manager |
| 14 | decision request |
| 16 | ranking unit |
| 18 | eviction ranking |
| 20 | eviction ranking |
| 22 | ranking module |
| 24 | eviction criterion |
| 26 | ranking module |
| 28 | eviction criterion |
| 30 | voting unit |
| 32 | voting result |
| 34 | decision response |

| 36 | decision block ("tie resolution?") |
| 38 | decision block ("policy agnostic tie resolution?") |
| 40 | action block |
| 42 | action block |
| 44 | system |
| 46 | process step |
| 48 | process step |
| 50 | process step |
| 52 | process step |
| 54 | eviction ranking |
| 56 | voting result |
| 58 | eviction ranking |
| 60 | voting result |
| 60' | result |
| 62 | eviction ranking |
| 64 | eviction ranking |
| 66 | voting result |
| 68 | eviction ranking |
| 70 | eviction ranking |
| 72 | voting result |
| 74 | eviction ranking |
| 76 | eviction ranking |
| 78 | voting result |
| 80 | eviction ranking |
| 82 | eviction ranking |
| 84 | voting result |
| A | memory block |
| B | memory block |
| C | memory block |
| D | memory block |
| E | memory block |

**Claims**

1. A memory manager (12, 12'), the memory manager (12, 12') being configured to:

   determine a plurality of eviction rankings (18, 20, 58), wherein each of the plurality of eviction rankings (18, 20, 58) assigns a position within the eviction ranking (18, 20, 58) to each of a plurality of eviction candidates based on at least one eviction criterion (24, 28); and
   cause a selected eviction candidate to be evicted;
   **characterized in that**
   the memory manager (12, 12') is further configured to select one of said eviction candidates by applying a voting algorithm to the plurality of eviction rankings (18, 20, 58), the voting algorithm being an algorithm which determines the most favored eviction candidates across multiple eviction rankings by aggregating measures of favorability derived from the multiple eviction rankings.

2. The memory manager (12, 12') of claim 1, the memory manager (12, 12') being further configured to: determine the plurality of eviction rankings (18, 20, 58) in parallel.

3. The memory manager (12,12') of claim 1 or 2, the memory manager (12,12') being further configured to:

   reapply the voting algorithm to a subset of the plurality of eviction rankings (18, 20, 58) if a tie occurs between candidates, most favored for eviction by the voting algorithm; or
   apply another voting algorithm to the plurality of eviction rankings (18, 20, 58) if a tie occurs between candidates that are most favored for eviction by the previously applied voting algorithm.

4. The memory manager (12, 12') of claim 3, the memory manager (12, 12') being further configured to: randomly select one of the eviction candidates between which a tie has occurred, if reapplying the voting algorithm or applying the other voting algorithm does not favor one of the candidates previously most favored for eviction by the voting algorithm.

5. A method of managing a memory (10), comprising:

   determining (46) a first eviction ranking (18) which ranks a plurality of memory blocks (A, B, C, D) based on at least one first eviction criterion (24);
   determining (48) a second eviction ranking (20, 58) which ranks the plurality of memory blocks (A, B, C, D) based on at least one second eviction criterion (28); and
   replacing (52) first data stored in a first memory block (D) with second data;
   **characterized by**
   determining (50) the first memory block (D) for eviction based on the first eviction ranking (18) and the second eviction ranking (20, 58);
   wherein determining (50) the first memory block (D) for eviction based on the first eviction ranking (18) and the second eviction ranking (20, 58) comprises assigning a third value to the first memory block (D);
   wherein the third value is an output of a function which takes a first value assigned to a first position of the first memory block (D) in the first eviction ranking (18) and a second value assigned to a second position of the first memory block (D) in the second eviction ranking (20, 58) as inputs.

6. The method of managing a memory according to claim 5,
   wherein the first and second eviction rankings (18, 20, 58) assign to each block (A, B, C, D) of the memory (10) a position in the first eviction ranking (18) and the second eviction ranking (20, 58), respectively.

7. The method of managing a memory (10) according to claim 6,
wherein a memory block (A, C) to which a lowest position in the first eviction ranking (18) and/or a lowest position in the second eviction (20, 58) ranking is assigned, is excluded from being determined as the first memory block (D).

8. The method of managing a memory (10) according to any one of claims 5 to 7,
wherein the third value is used to establish a voting result (32) and the first memory block (D) is a memory block to which is assigned a highest position in the voting result (32).

9. The method of managing a memory according to any one of claims 5 to 7,

wherein determining (50) the first memory block (D) for eviction based on the first eviction ranking (18) and the second eviction ranking (58) further comprises assigning a sixth value to a second memory block (C);
wherein the sixth value is an output of the function which takes a fourth value assigned to a fourth position of the second memory block (C) in the first eviction ranking (18) and a fifth value assigned to a fifth position of the second memory block (C) in the second eviction ranking (58) as inputs;
wherein, if the sixth value equals the third value, one of the first and second eviction rankings (18, 58) is disregarded for determining the first memory block (D) for eviction.

10. The method of managing a memory (10) according to any one of claims 5 to 9,
wherein the third value is a linear combination of the first value and the second value.

11. The method of managing a memory (10) according to any one of claims 5 to 10, further comprising:
monitoring the eviction decisions for favoritism and adapting the function if favoritism is detected.

12. The method of managing a memory (10) according to any one of claims 5 to 11, further comprising:

determining a third eviction ranking (54) which ranks the plurality of memory blocks (A, B, C, D) based on at least one third eviction criterion;
determining a preliminary voting result (56) based on the first eviction ranking (18), the second eviction ranking (20, 58) and the third eviction ranking (54); and
detecting a tie regarding the first memory block (D) and a second memory block (A), based on the preliminary voting result (56).

13. The method of managing a memory (10) according to any one of claims 5 to 12, further comprising:

determining a fourth eviction ranking which ranks the plurality of memory blocks (A, B, C, D) based on the at least one first eviction criterion (24);
determining a fifth eviction ranking which ranks the plurality of memory blocks (A, B, C, D) based on the at least one second eviction criterion (28);
selecting a third memory block for eviction based on the fourth eviction ranking and the fifth eviction ranking; and
replacing third data stored in the third memory block with fourth data.

14. The method of managing a memory (10) according to any one of claims 5 to 13,

wherein the memory (10) is a cache;
and the method further comprises:

detecting a cache miss in regard to the second data; and
determining that the cache is full.

**Patentansprüche**

1. Speicherverwalter (12, 12'), wobei der Speicherverwalter (12, 12') konfiguriert ist zum:

Bestimmen einer Vielzahl von Räumungsrangfolgen (18, 20, 58), wobei jede der Vielzahl von Räumungsrangfolgen (18, 20, 58) jedem einer Vielzahl von Räumungskandidaten eine Position innerhalb der Räumungsrangfolge (18, 20, 58) auf der Grundlage mindestens eines Räumungskriteriums (24, 28) zuweist; und
Veranlassen, dass ein ausgewählter Räumungskandidat zur Räumung gezwungen wird;
**dadurch gekennzeichnet, dass**
der Speicherverwalter (12, 12') weiter so konfiguriert ist, dass er einen der Räumungskandidaten auswählt, indem er einen Abstimmungsalgorithmus auf die Vielzahl von Räumungsrangfolgen (18, 20, 58) anwendet, wobei der Abstimmungsalgorithmus ein Algorithmus ist, der die am meisten favorisierten Räumungskandidaten über mehrere Räumungsrangfolgen hinweg bestimmt, indem er aus den mehreren Räumungsrangfolgen abgeleitete Maße der Favorisierung zusammenfasst.

**2.** Speicherverwalter (12, 12') nach Anspruch 1, wobei der Speicherverwalter (12, 12') weiter konfiguriert ist zum:

parallelen Bestimmen der Vielzahl von Räumungsrangfolgen (18, 20, 58).

**3.** Speicherverwalter (12, 12') nach Anspruch 1 oder 2, wobei der Speicherverwalter (12, 12') weiter konfiguriert ist zum:

erneuten Anwenden des Abstimmungsalgorithmus auf eine Teilmenge der Vielzahl von Räumungsrangfolgen (18, 20, 58), wenn ein Gleichstand zwischen Kandidaten auftritt, die vom Abstimmungsalgorithmus am meisten für die Räumung favorisiert werden; oder
Anwenden eines anderen Abstimmungsalgorithmus auf die Vielzahl von Räumungsrangfolgen (18, 20, 58), wenn ein Gleichstand zwischen Kandidaten auftritt, die von dem zuvor angewandten Abstimmungsalgorithmus am meisten für die Räumung favorisiert werden.

**4.** Speicherverwalter (12, 12') nach Anspruch 3, wobei der Speicherverwalter (12, 12') weiter konfiguriert ist zur:

zufälligen Auswahl eines der Räumungskandidaten, zwischen denen ein Gleichstand aufgetreten ist, wenn die erneute Anwendung des Abstimmungsalgorithmus oder die Anwendung des anderen Abstimmungsalgorithmus keinen derjenigen Kandidaten favorisiert, die zuvor durch den Abstimmungsalgorithmus am meisten für die Räumung favorisiert wurden.

**5.** Verfahren zum Verwalten eines Speichers (10), umfassend:

Bestimmen (46) einer ersten Räumungsrangfolge (18), die eine Vielzahl von Speicherblöcken (A, B, C, D) auf der Grundlage mindestens eines ersten Räumungskriteriums (24) in die Rangfolge einstuft;
Bestimmen (48) einer zweiten Räumungsrangfolge (20, 58), die die Vielzahl von Speicherblöcken (A, B, C, D) auf der Grundlage mindestens eines zweiten Räumungskriteriums (28) in die Rangfolge einstuft; und
Ersetzen (52) von in einem ersten Speicherblock (D) gespeicherten ersten Daten durch zweite Daten;
**gekennzeichnet durch**
Bestimmen (50) des ersten Speicherblocks (D) für die Räumung auf der Grundlage der ersten Räumungsrangfolge (18) und der zweiten Räumungsrangfolge (20, 58);
wobei das Bestimmen (50) des ersten Speicherblocks (D) für die Räumung auf der Grundlage der ersten Räumungsrangfolge (18) und der zweiten Räumungsrangfolge (20, 58) das Zuweisen eines dritten Wertes an den ersten Speicherblock (D) umfasst;
wobei der dritte Wert eine Ausgabe einer Funktion ist, die einen ersten Wert, der einer ersten Position des ersten Speicherblocks (D) in der ersten Räumungsrangfolge (18) zugewiesen ist, und einen zweiten Wert, der einer zweiten Position des ersten Speicherblocks (D) in der zweiten Räumungsrangfolge (20, 58) zugewiesen ist, als Eingaben nimmt.

**6.** Verfahren zum Verwalten eines Speichers nach Anspruch 5,
wobei die erste und zweite Räumungsrangfolge (18, 20, 58) jedem Block (A, B, C, D) des Speichers (10) eine Position in der ersten Räumungsrangfolge (18) bzw. der zweiten Räumungsrangfolge (20, 58) zuweisen.

**7.** Verfahren zum Verwalten eines Speichers (10) nach Anspruch 6,
wobei ein Speicherblock (A, C), dem eine niedrigste Position in der ersten Räumungsrangfolge (18) und/oder eine niedrigste Position in der zweiten Räumungsrangfolge (20, 58) zugewiesen ist, davon ausgeschlossen ist, als der erste Speicherblock (D) bestimmt zu werden.

**8.** Verfahren zum Verwalten eines Speichers (10) nach einem der Ansprüche 5 bis 7,
wobei der dritte Wert verwendet wird, um ein Abstimmungsergebnis (32) zu erstellen, und der erste Speicherblock (D) ein Speicherblock ist, dem eine höchste Position in dem Abstimmungsergebnis (32) zugewiesen ist.

**9.** Verfahren zum Verwalten eines Speichers nach einem der Ansprüche 5 bis 7,

wobei das Bestimmen (50) des ersten Speicherblocks (D) für die Räumung auf der Grundlage der ersten Räumungsrangfolge (18) und der zweiten Räumungsrangfolge (58) weiter das Zuweisen eines sechsten Wertes an einen zweiten Speicherblock (C) umfasst;
wobei der sechste Wert eine Ausgabe der Funktion ist, die einen vierten Wert, der einer vierten Position des zweiten Speicherblocks (C) in der ersten Räumungsrangfolge (18) zugewiesen ist, und einen fünften Wert, der einer fünften Position des zweiten Speicherblocks (C) in der zweiten Räumungsrangfolge (58) zugewiesen ist, als Eingaben nimmt;
wobei, wenn der sechste Wert gleich dem dritten Wert ist, eine der ersten und zweiten Räumungsrangfolge (18, 58) für die Bestimmung des ersten Speicherblocks (D) für die Räumung außer Acht gelassen wird.

10. Verfahren zum Verwalten eines Speichers (10) nach einem der Ansprüche 5 bis 9, wobei der dritte Wert eine lineare Kombination aus dem ersten Wert und dem zweiten Wert ist.

11. Verfahren zum Verwalten eines Speichers (10) nach einem der Ansprüche 5 bis 10, weiter umfassend: Überwachen der Räumungsentscheidungen auf Favorisierung und Anpassung der Funktion, wenn Favorisierung erkannt wird.

12. Verfahren zum Verwalten eines Speichers (10) nach einem der Ansprüche 5 bis 11, weiter umfassend:

Bestimmen einer dritten Räumungsrangfolge (54), die die Vielzahl von Speicherblöcken (A, B, C, D) auf der Grundlage mindestens eines dritten Räumungskriteriums in die Rangfolge einstuft; Bestimmen eines vorläufigen Abstimmungsergebnisses (56) auf der Grundlage der ersten Räumungsrangfolge (18), der zweiten Räumungsrangfolge (20, 58) und der dritten Räumungsrangfolge (54); und Erkennen eines Gleichstandes bezüglich des ersten Speicherblocks (D) und eines zweiten Speicherblocks (A) auf der Grundlage des vorläufigen Abstimmungsergebnisses (56).

13. Verfahren zum Verwalten eines Speichers (10) nach einem der Ansprüche 5 bis 12, weiter umfassend:

Bestimmen einer vierten Räumungsrangfolge, die die Vielzahl von Speicherblöcken (A, B, C, D) auf der Grundlage des mindestens einen ersten Räumungskriteriums (24) in die Rangfolge einstuft; Bestimmen einer fünften Räumungsrangfolge, die die Vielzahl von Speicherblöcken (A, B, C, D) auf der Grundlage des mindestens einen zweiten Räumungskriteriums (28) in die Rangfolge einstuft; Auswählen eines dritten Speicherblocks für die Räumung auf der Grundlage der vierten Räumungsrangfolge und der fünften Räumungsrangfolge; und Ersetzen von dritten Daten, die im dritten Speicherblock gespeichert sind, durch vierte Daten.

14. Verfahren zum Verwalten eines Speichers (10) nach einem der Ansprüche 5 bis 13,

wobei der Speicher (10) ein Cache ist; und das Verfahren weiter umfasst:

Erkennen eines Cache-Miss in Bezug auf die zweiten Daten; und Bestimmen, dass der Cache voll ist.

**Revendications**

1. Gestionnaire de mémoire (12, 12'), le gestionnaire de mémoire (12, 12') étant configuré pour :

déterminer une pluralité de classements d'expulsion (18, 20, 58), dans lequel chacun de la pluralité de classements d'expulsion (18, 20, 58) assigne une position dans le classement d'expulsion (18, 20, 58) à chacun d'une pluralité de candidats à l'expulsion sur la base d'au moins un critère d'expulsion (24, 28) ; et causer l'expulsion d'un candidat à l'expulsion sélectionné ; **caractérisé en ce que** le gestionnaire de mémoire (12, 12') est en outre configuré pour sélectionner l'un desdits candidats à l'expulsion en appliquant un algorithme de vote sur la pluralité de classements d'expulsion (18, 20, 58), l'algorithme de vote étant un algorithme qui détermine les candidats à l'expulsion les plus favorisés parmi de multiples classements d'expulsion en regroupant des mesures de faveurs tirées des multiples classements d'expulsion.

2. Gestionnaire de mémoire (12, 12') selon la revendication 1, le gestionnaire de mémoire (12, 12') étant en outre configuré pour : déterminer la pluralité de classements d'expulsion (18, 20, 58) en parallèle.

3. Gestionnaire de mémoire (12, 12') selon la revendication 1 ou 2, le gestionnaire de mémoire (12, 12') étant en outre configuré pour :

appliquer à nouveau l'algorithme de vote sur un sous-ensemble de la pluralité de classements d'expulsion (18, 20, 58) si un ex aequo se produit entre des candidats, les plus favorisés pour une expulsion par l'algorithme de vote ; ou appliquer un autre algorithme de vote sur la pluralité de classements d'expulsion (18, 20, 58) si un ex aequo se produit entre des candidats qui sont les plus favorisés pour une expulsion par l'algorithme de vote appliqué précédemment.

4. Gestionnaire de mémoire (12, 12') selon la revendication 3, le gestionnaire de mémoire (12, 12') étant en outre configuré pour : sélectionner de manière aléatoire l'un des candidats à l'expulsion entre lesquels un ex aequo s'est produit, si le fait d'appliquer à nouveau l'algorithme de vote ou l'application de l'autre algorithme de vote ne favorise pas l'un des candidats précédemment les plus favorisés pour une expulsion par l'algorithme de vote.

**5.** Procédé de gestion d'une mémoire (10), comprenant :

une détermination (46) d'un premier classement d'expulsion (18) qui classe une pluralité de blocs de mémoire (A, B, C, D) sur la base d'au moins un premier critère d'expulsion (24) ;
une détermination (48) d'un deuxième classement d'expulsion (20, 58) qui classe la pluralité de blocs de mémoire (A, B, C, D) sur la base d'au moins un deuxième critère d'expulsion (28) ; et
un remplacement (52) de premières données stockées dans un premier bloc de mémoire (D) par des deuxièmes données ;
**caractérisé par**
une détermination (50) du premier bloc de mémoire (D) pour une expulsion sur la base du premier classement d'expulsion (18) et du deuxième classement d'expulsion (20, 58) ;
dans lequel la détermination (50) du premier bloc de mémoire (D) pour une expulsion sur la base du premier classement d'expulsion (18) et du deuxième classement d'expulsion (20, 58) comprend une assignation d'une troisième valeur au premier bloc de mémoire (D) ;
dans lequel la troisième valeur est une sortie d'une fonction qui prend une première valeur assignée à une première position du premier bloc de mémoire (D) dans le premier classement d'expulsion (18) et une deuxième valeur assignée à une deuxième position du premier bloc de mémoire (D) dans le deuxième classement d'expulsion (20, 58) comme entrées.

**6.** Procédé de gestion d'une mémoire selon la revendication 5,
dans lequel les premier et deuxième classements d'expulsion (18, 20, 58) assignent à chaque bloc (A, B, C, D) de la mémoire (10) une position dans le premier classement d'expulsion (18) et le deuxième classement d'expulsion (20, 58), respectivement.

**7.** Procédé de gestion d'une mémoire (10) selon la revendication 6,
dans lequel un bloc de mémoire (A, C) auquel une position la plus basse dans le premier classement d'expulsion (18) et/ou une position la plus basse dans le deuxième classement d'expulsion (20, 58) sont assignées est exclu d'une détermination comme premier bloc de mémoire (D).

**8.** Procédé de gestion d'une mémoire (10) selon l'une quelconque des revendications 5 à 7,
dans lequel la troisième valeur est utilisée pour établir un résultat de vote (32) et le premier bloc de mémoire (D) est un bloc de mémoire auquel est assignée une position la plus haute dans le résultat de vote (32).

**9.** Procédé de gestion d'une mémoire selon l'une quelconque des revendications 5 à 7,

dans lequel la détermination (50) du premier bloc de mémoire (D) pour une expulsion sur la base du premier classement d'expulsion (18) et du deuxième classement d'expulsion (58) comprend en outre une assignation d'une sixième valeur à un deuxième bloc de mémoire (C) ;
dans lequel la sixième valeur est une sortie de la fonction qui prend une quatrième valeur assignée à une quatrième position du deuxième bloc de mémoire (C) dans le premier classement d'expulsion (18) et une cinquième valeur assignée à une cinquième position du deuxième bloc de mémoire (C) dans le deuxième classement d'expulsion (58) comme entrées ;
dans lequel, si la sixième valeur est égale à la troisième valeur, l'un des premier et deuxième classements d'expulsion (18, 58) n'est pas pris en compte pour déterminer le premier bloc de mémoire (D) pour une expulsion.

**10.** Procédé de gestion d'une mémoire (10) selon l'une quelconque des revendications 5 à 9,
dans lequel la troisième valeur est une combinaison linéaire de la première valeur et de la deuxième valeur.

**11.** Procédé de gestion d'une mémoire (10) selon l'une quelconque des revendications 5 à 10, comprenant en outre :
une surveillance d'un favoritisme dans les décisions d'expulsion et une adaptation de la fonction si un favoritisme est détecté.

**12.** Procédé de gestion d'une mémoire (10) selon l'une quelconque des revendications 5 à 11, comprenant en outre :

une détermination d'un troisième classement d'expulsion (54) qui classe la pluralité de blocs de mémoire (A, B, C, D) sur la base d'au moins un troisième critère d'expulsion ;
une détermination d'un résultat de vote préliminaire (56) sur la base du premier classement d'expulsion (18), du deuxième classement d'expulsion (20, 58) et du troisième classement d'expulsion (54) ; et
une détection d'un ex aequo concernant le premier bloc de mémoire (D) et un deuxième bloc de mémoire (A), sur la base du résultat de vote préliminaire (56).

13. Procédé de gestion d'une mémoire (10) selon l'une quelconque des revendications 5 à 12, comprenant en outre :

une détermination d'un quatrième classement d'expulsion qui classe la pluralité de blocs de mémoire (A, B, C, D) sur la base du au moins un premier critère d'expulsion (24) ;
une détermination d'un cinquième classement d'expulsion qui classe la pluralité de blocs de mémoire (A, B, C, D) sur la base du au moins un deuxième critère d'expulsion (28) ;
une sélection d'un troisième bloc de mémoire pour une expulsion sur la base du quatrième classement d'expulsion et du cinquième classement d'expulsion ; et
un remplacement de troisièmes données stockées dans le troisième bloc de mémoire par des quatrièmes données.

14. Procédé de gestion d'une mémoire (10) selon l'une quelconque des revendications 5 à 13,

dans lequel la mémoire (10) est un cache ;
et le procédé comprend en outre :

une détection d'un défaut de cache concernant les deuxièmes données ; et
le fait de déterminer que le cache est plein.

**Fig. 1**

**Fig. 2**

**Fig. 3**

START

46

DETERMINING A FIRST EVICTION RANKING WHICH RANKS A
PLURALITY OF MEMORY BLOCKS BASED ON AT LEAST ONE FIRST
EVICTION CRITERION

48

DETERMINING A SECOND EVICTION RANKING WHICH RANKS THE
PLURALITY OF MEMORY BLOCKS BASED ON AT LEAST ONE SECOND
EVICTION CRITERION

50

DETERMINING A FIRST MEMORY BLOCK FOR EVICTION BASED ON
THE FIRST EVICTION RANKING AND THE SECOND EVICTION
RANKING

52

REPLACING FIRST DATA STORED IN THE FIRST MEMORY BLOCK
WITH SECOND DATA

STOP

**Fig. 4**

**Fig. 5**

**Fig. 6**

**Fig. 7**

**Fig. 8a**

**Fig. 8b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1503303 A2